# EUROPÄISCHE PATENTSCHRIFT

(11) **EP 3 098 147 B1**
(45) Veröffentlichungstag und Bekanntmachung des Hinweises auf die Patenterteilung: **28.12.2022**
(21) Anmeldenummer: 16168612.6
(22) Anmeldetag: 06.05.2016
(51) Int. Cl.: B62J 15/00

(54) **RADSCHÜTZER FÜR EIN FAHRRAD SOWIE VERFAHREN ZUR HERSTELLUNG EINES RADSCHÜTZERS**
WHEEL PROTECTOR FOR A BICYCLE AND METHOD FOR THE PREPARATION OF A WHEEL PROTECTOR
PROTÈGE-ROUES DE VÉLO ET SON PROCÉDÉ DE PRODUCTION

(30) Priorität: 29.05.2015 DE 102015108549
(43) Veröffentlichungstag der Anmeldung: 30.11.2016
(73) Patentinhaber: SKS metaplast Scheffer-Klute GmbH, 59846 Sundern (DE)
(72) Erfinder: Kordes, Sven, 59846 Sundern (DE); Grabski, Karsten, 59469 Ense (DE); Wedhorn, Sebastian, 41540 Dormagen (DE); Fuchs, Patrick, 59759 Arnsberg (DE)
(74) Vertreter: Basfeld, Rainer

(56) Entgegenhaltungen:
- WO-A1-2006/048108
- DE-A1-102007 022 964
- DE-U1-202013 004 180
- GB-A- 2 493 978

## Beschreibung

Die vorliegende Erfindung betrifft einen Radschützer für ein Fahrrad gemäß dem Oberbegriff des Anspruchs 1 sowie ein Verfahren zur Herstellung eines Radschützers gemäß dem Oberbegriff des Anspruchs 4.

Radschützer für ein Fahrrad bestehen in der Regel aus Kunststoff, insbesondere aus einem Polypropylen (PP). Polypropylen gehört zu der Polymergruppe der Polyolefine und lässt sich nur mit hohem Aufwand bedrucken. Spritzgussartikel aus Polypropylen werden häufig über das Tampondruckverfahren bedruckt. Die Qualität und Präzision beim Tampondruck ist relativ schlecht. Des Weiteren muss der Artikel nach dem Spritzgussvorgang weiter zum Drucker transportiert werden, was einen relativ hohen Aufwand bedeutet. Es besteht weiterhin die Möglichkeit, auf den Radschützer bedruckte Folien aufzukleben, die beispielsweise ein Label oder ein Dekor aufweisen können. Derartige Folien können sich jedoch einerseits vom Radschützer lösen. Andererseits verleihen sie dem Radschützer häufig kein qualitativ hochwertiges Aussehen, insbesondere weil der Nutzer erkennt, dass sie vom eigentlichen Radschützer verschieden sind.

Aus der DE 20 2013 004 180 U1 ist ein Behälterdeckel bekannt, der eine Folie mit einem Matrix-Barcode umfasst. Für die Herstellung wird die mit dem Barcode versehene Folie in ein Spritzgusswerkzeug eingelegt und mit dem Behälterdeckel hinterspritzt.

Ein Radschützer sowie ein Verfahren der eingangs genannten Art sind aus der DE 10 2007 022 964 A1 bekannt. Der darin beschriebene Radschützer weist ein flexibles Solarmodul auf, das auf der Außenseiten des gekrümmten Radschützers angeordnet ist. Das Solarmodul wird beim Herstellungsprozess in ein Formwerkzeug eingebacht und vollständig mit dem Kunststoffmaterial des Radschützers hinterspritzt.

Das der vorliegenden Erfindung zugrunde liegende Problem ist die Schaffung eines Radschützers der eingangs genannten Art, der mit qualitativ hochwertigen Dekoren oder Informationen wie Labeln oder anderen Textaufdrucken versehen ist. Weiterhin soll ein Verfahren zur Herstellung eines derartigen Radschützers angegeben werden.

Dies wird erfindungsgemäß durch einen Radschützer mit den kennzeichnenden Merkmalen des Anspruchs 1 und ein Verfahren mit den kennzeichnenden Merkmalen des Anspruch 4 erreicht. Die Unteransprüche betreffen bevorzugte Ausgestaltungen der Erfindung.

Gemäß Anspruch 1 ist vorgesehen, dass der Radschutzkörper zwei seitliche Anformungen aufweist, die dazu eingerichtet sind, für die Anbringung an einem Fahrrad nach unten gebogen zu werden, so dass durch die Biegung nach unten der zwei seitlichen Anformungen insgesamt eine teiltorusförmige Gestalt des Radschützers entsteht, dass die Trägermittel Trägermittel für Dekor und/oder Informationen sind und dass die mindestens eine Folie bedruckt ist. Eine Folie weist häufig eine einfache Geometrie wie beispielsweise eine im Wesentlichen zweidimensionale Form auf. Somit kann die Folie hochwertig, beispielsweise im Digitaldruck, bedruckt werden.

Durch das Hinterspritzen ergibt sich eine feste Verbindung zwischen den Trägermitteln und dem Radschutzkörper. Da sich die Trägermittel direkt beim Spritzgussvorgang mit dem Radschutzkörper fest verbinden, entfällt dadurch eine aufwendige Nachbearbeitung. Insbesondere entfällt ein nachträgliches Bedrucken des Radschützers, wodurch Kosten eingespart werden können.

Es kann vorgesehen sein, dass die Trägermittel ein Label und/oder einen Text und/oder ein Dekor und/oder einen farbigen Bereich und/oder einen transparenten Bereich aufweisen. Der Radschützer lässt sich also durch die Trägermittel mit Labeln, Symbolen, Durchlichttechnik und mehrfarbigen flächigen Dekoren versehen.

Es besteht die Möglichkeit, dass der Radschutzkörper und die Trägermittel zumindest teilweise und/oder abschnittsweise aus dem gleichen Material bestehen, wobei dieses Material beispielsweise ein Polypropylen ist. Durch die Wahl des gleichen Materials für den Radschutzkörper und die Trägermittel wird ein hochwertiger Stoffschluss gewährleistet.

Gemäß Anspruch 4 ist vorgesehen, dass die Trägermittel Trägermittel für Dekor und/oder Informationen sind, dass die mindestens eine Folie vor dem Einlegen in das Spritzgusswerkzeug bedruckt wird und dass der Radschutzkörper zwei seitliche Anformungen aufweist, die für die Anbringung an einem Fahrrad nach unten gebogen werden, so dass durch die Biegung nach unten der zwei seitlichen Anformungen insgesamt eine teiltorusförmige Gestalt des Radschützers entsteht.

Weiterhin können die Trägermittel vor dem Einlegen in das Spritzgusswerkzeug beschnitten werden. Auf diese Weise können durch den Spritzgussprozesses fertig dekorierte Radschützer hergestellt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Explosionsansicht eines erfindungsgemäßen Radschützers;
- Fig. 2: eine Draufsicht auf einen erfindungsgemäßen Radschützer.

In den Figuren sind gleiche und funktional gleiche Teile mit gleichen Bezugszeichen versehen.

Das in den Figuren abgebildete Ausführungsbeispiel eines erfindungsgemäßen Radschützers umfasst einen Radschutzkörper 1 und eine als Trägermittel 2 dienende Folie, die mit einem Label 3 bedruckt ist. Es besteht durchaus die Möglichkeit, mehr als eine Folie, beispielsweise zwei oder drei Folien vorzusehen.

Der Radschutzkörper 1 weist zwei seitliche Anformungen 4 auf, die für die Anbringung am Fahrrad nach unten gebogen werden, so dass insgesamt eine teiltorusförmige Gestalt des Radschützers entsteht.

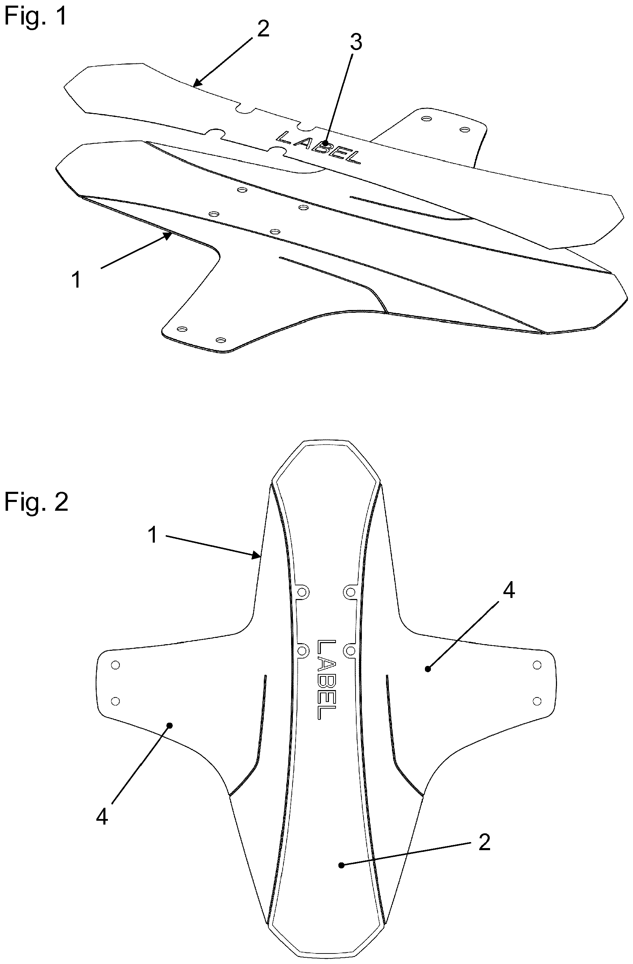

Für die Herstellung des in Fig. 2 abgebildeten fertigen Radschützers wird mindestens eine, als Trägermittel 2 dienende Folie mit den gewünschten Informationen oder Dekoren bedruckt, gegebenenfalls beschnitten und dann in ein Spritzgusswerkzeug eingelegt. Dort kann die Folie beispielsweise durch Ansaugen festgehalten werden.

Anschließend wird der Radschutzkörper in dem Werkzeug durch ein Spritzgussverfahren hergestellt und dabei hinter die Folie gespritzt. Da diese bei dem Spritzgießen ebenfalls erwärmt wird, ergibt sich zwischen der Folie und dem Radschutzkörper 1 ein Stoffschluss. Dies umso mehr, wenn die Folie und der Radschutzkörper 1 aus dem gleichen Material wie beispielsweise Polypropylen bestehen.

Nach der Entnahme aus dem Spritzgusswerkzeug liegt ein fertig dekorierter Radschützer vor, wie er beispielsweise in Fig. 2 abgebildet ist. In der Regel muss dieser Radschützer nach der Entnahme nicht mehr nachbearbeitet werden.

## Patentansprüche

1. Radschützer für ein Fahrrad, umfassend
- einen Radschutzkörper (1), der zumindest teilweise und/oder abschnittsweise aus Kunststoff besteht, sowie
- Trägermittel (2), wobei der Radschutzkörper (1) und die Trägermittel (2) durch Hinterspritzen fest miteinander verbunden sind, wobei die Trägermittel (2) mindestens eine Folie umfassen oder aus mindestens einer Folie bestehen,
**dadurch gekennzeichnet,**
**dass** der Radschutzkörper (1) zwei seitliche Anformungen (4) aufweist, die dazu eingerichtet sind, für die Anbringung an einem Fahrrad nach unten gebogen zu werden, so dass durch die Biegung nach unten der zwei seitlichen Anformungen (4) insgesamt eine teiltorusförmige Gestalt des Radschützers entsteht,
**dass** die Trägermittel (2) Trägermittel (2) für Dekor und/oder Informationen sind
und **dass** die mindestens eine Folie bedruckt ist.

2. Radschützer nach Anspruch 1, **dadurch gekennzeichnet, dass** die Trägermittel (2) ein Label (3) und/oder einen Text und/oder ein Dekor und/oder einen farbigen Bereich und/oder einen transparenten Bereich aufweisen.

3. Radschützer nach einem der vorherigen Ansprüche, **dadurch gekennzeichnet, dass** der Radschutzkörper (1) und die Trägermittel (2) zumindest teilweise und/oder abschnittsweise aus dem gleichen Material bestehen, wobei dieses Material beispielsweise ein Polypropylen ist.

4. Verfahren zur Herstellung eines Radschützers, umfassend folgende Verfahrensschritte:
- Trägermittel (2) werden in ein Spritzgusswerkzeug eingebracht, wobei die Trägermittel (2) mindestens eine Folie umfassen oder aus mindestens einer Folie bestehen,
- die Trägermittel (2) werden mit einem Radschutzkörper (1) hinterspritzt,
**dadurch gekennzeichnet,**
**dass** die Trägermittel (2) Trägermittel (2) für Dekor und/oder Informationen sind,
**dass** die mindestens eine Folie vor dem Einlegen in das Spritzgusswerkzeug bedruckt wird
und **dass** der Radschutzkörper (1) zwei seitliche Anformungen (4) aufweist, die für die Anbringung an einem Fahrrad nach unten gebogen werden, so dass durch die Biegung nach unten der zwei seitlichen Anformungen (4) insgesamt eine teiltorusförmige Gestalt des Radschützers entsteht.

5. Verfahren nach Anspruch 4, **dadurch gekennzeichnet, dass** die Trägermittel (2) vor dem Einlegen in das Spritzgusswerkzeug beschnitten werden.

6. Verfahren nach einem der Ansprüche 4 und 5, **dadurch gekennzeichnet, dass** die Trägermittel (2) und der Radschutzkörper (1) zumindest teilweise und/oder abschnittsweise aus dem gleichen Material bestehen, wobei dieses Material beispielsweise ein Polypropylen ist.

## Claims

1. Wheel protector for a bicycle, comprising
- a wheel protecting body (1) which consists at least partially and/or in some sections of plastic, and
- carrying means (2), wherein the wheel protecting body (1) and the carrying means (2) are firmly connected to one another by means of back-injection, wherein the carrying means (2) comprise at least one film or consist of at least one film,
**characterised in**
**that** the wheel protecting body (1) has two lateral mouldings (4) which are configured to be bent downward for mounting to a bicycle, such that, by means of bending downward the two lateral mouldings (4), all in all a partially toroidal shape of the wheel protector results,
**that** the carrying means (2) are carrying means (2) for decoration and/or information
and **that** the at least one film is printed.

2. Wheel protector according to claim 1, **characterised in that** the carrying means (2) have a label (3) and/or a text and/or a decoration and/or a coloured region and/or a transparent region.

3. Wheel protector according to any of the preceding claims, **characterised in that** the wheel protecting body (1) and the carrying means (2) consist at least partially and/or in some sections of the same material, wherein this material is for example a polypropylene.

4. Method for producing a wheel protector, comprising the following method steps:
- carrying means (2) are introduced into an injection moulding tool, wherein the carrying means (2) comprise at least one film or consist of at least one film,
- the carrying means (2) are back-injected with a wheel protecting body (1), **characterised in**
**that** the carrying means (2) are carrying means (2) for decoration and/or information,
**that** the at least one film is printed before being laid into the injection-moulding tool
and **that** the wheel protecting body (1) has two lateral mouldings (4) which are bent downward for mounting to a bicycle, such that, by means of bending downward the two lateral mouldings (4), all in all a partially toroidal shape of the wheel protector results.

5. Method according to claim 4, **characterised in that** the carrying means (2) are trimmed prior to being laid into the injection-moulding tool.

6. Method according to any of claims 4 and 5, **characterised in that** the carrying means (2) and the wheel protecting body (1) consist at least partially and/or in some sections of the same material, wherein this material is for example a polypropylene.

## Revendications

1. Garde-boue pour une bicyclette, comprenant
- un corps de garde-boue (1) qui se compose au moins partiellement et/ou par sections de matière plastique, et
- des moyens de support (2), dans lequel le corps de garde-boue (1) et les moyens de support (2) sont reliés mutuellement fermement par rétro-injection, dans lequel les moyens de support (2) comprennent au moins une feuille ou se composent d'au moins une feuille,
**caractérisé**
**en ce que** le corps de garde-boue (1) présente deux extensions latérales (4) qui sont configurées pour être pliées vers le bas pour le montage sur une bicyclette, de sorte que la flexion vers le bas des deux extensions latérales (4) créé une forme partiellement torique du garde-boue,
**en ce que** les moyens de support (2) sont des moyens de support (2) de décoration et/ou d'information
et **en ce que** la au moins une feuille est imprimée.

2. Garde-boue selon la revendication 1, **caractérisé en ce que** les moyens de support (2) présentent une étiquette (3) et/ou un texte et/ou une décoration et/ou une zone colorée et/ou une zone transparente.

3. Garde-boue selon l'une quelconque des revendications précédentes, **caractérisé en ce que** le corps de garde-boue (1) et les moyens de support (2) se composent au moins partiellement et/ou par sections du même matériau, dans lequel ce matériau est par exemple un polypropylène.

4. Procédé de fabrication d'un garde-boue, comprenant les étapes de procédé suivantes :
- les moyens de support (2) sont introduits dans un moule à injection, dans lequel les moyens de support (2) comprennent au moins une feuille ou se composent d'au moins une feuille,
- les moyens de support (2) sont rétro-injectés avec un corps de garde-boue (1),
**caractérisé**
**en ce que** les moyens de support (2) sont des moyens de support (2) de décoration et/ou d'information,
**en ce que** la au moins une feuille est imprimée avant l'insertion dans le moule à injection,
et **en ce que** le corps de garde-boue (1) présente deux extensions latérales (4) qui sont pliées vers le bas pour le montage sur une bicyclette, de sorte que la flexion vers le bas des deux extensions latérales (4) créé une forme partiellement torique du garde-boue.

5. Procédé selon la revendication 4, **caractérisé en ce que** les moyens de support (2) sont taillés avant l'insertion dans le moule à injection.

6. Procédé selon l'une quelconque des revendications 4 et 5, **caractérisé en ce que** les moyens de support (2) et le corps de garde-boue (1) se composent au moins partiellement et/ou par sections du même matériau, dans lequel ce matériau est par exemple un polypropylène.
